# EUROPÄISCHE PATENTSCHRIFT

(11) **EP 1 748 870 B1**
(45) Veröffentlichungstag und Bekanntmachung des Hinweises auf die Patenterteilung: **26.12.2007**
(21) Anmeldenummer: 06742697.3
(22) Anmeldetag: 26.04.2006
(51) Int. Cl.: B25J 15/06

(54) **SAUGGREIFER MIT BOHRUNGEN ZUM ANLEGEN EINES UNTERDRUCKS UND EINES ÜBERDRUCKS**
VACUUM GRIPPER WITH BORES FOR APPLYING A NEGATIVE PRESSURE AND A POSITIVE PRESSURE
PINCE ASPIRANTE COMPORTANT DES ORIFICES SERVANT A APPLIQUER UNE PRESSION NEGATIVE ET UNE PRESSION POSITIVE

(30) Priorität: 02.05.2005 DE 102005020840
(43) Veröffentlichungstag der Anmeldung: 07.02.2007
(73) Patentinhaber: FIPA GmbH, 85737 Ismaning (DE)
(72) Erfinder: FÖRG, Georg, 85399 Hallbergmoos (DE); KOB, Roland, 85435 Erding (DE)
(74) Vertreter: Rapp, Bertram
(86) Internationale Anmeldenummer: PCT/EP2006/003861
(87) Internationale Veröffentlichungsnummer: WO 2006/117114

(56) Entgegenhaltungen:
- DE-A1- 3 516 941
- DE-C1- 19 817 217
- US-B1- 6 382 692
- US-B1- 6 607 054

## Beschreibung

Die Erfindung betrifft einen Sauggreifer zum Ansaugen und Halten von Werkstücken nach dem Oberbegriff des Anspruchs 1.

Ein solcher Sauggreifer ist aus der DE-A-35 16 941 bekannt.

Derartige Sauggreifer werden benutzt, um Werkstücke zu handhaben, insbesondere Werkstücke mit einer planebenen Oberfläche wie Platten und Scheiben. In der Regel befinden sich diese Sauggreifer an den Enden von Roboterarmen oder Manipulatoren und dienen dem Erfassen, Ansaugen, Anheben und Wiederablegen der flachen Werkstücke. Herkömmliche Sauggreifer, wie sie beispielsweise in der DE 103 35 021 B3 beschrieben sind, bestehen aus einem Saugkörper und einem Saugkörperhalter, wobei der Saugkörperhalter in der Regel aus Metall gefertigt ist und dem Saugkörper, bei dem es sich um ein gummielastisches Bauteil handelt, lagert. Der Saugkörperhalter selbst ist wiederum an dem Manipulator oder Roboterarm angebracht und weist sowohl Befestigungsvorrichtungen (z. B. Gewinde) auf als auch eine Vorrichtung zur Übertragung des Vakuums von einer zentralen Vakuumquelle in den Raum zwischen Saugkörper und Werkstück.

Für die meisten Anwendungsfälle genügt es, lediglich mit Vakuum zu arbeiten, um eine Platte zu handhaben. Der Sauggreifer wird auf die Platte aufgesetzt, dann das Vakuum angelegt, wodurch sich die Platte an dem Saugkörper ansaugt, sodann wird die Manipulation der Platte vorgenommen und anschließend der evakuierte Raum zwischen Saugkörper und Platte wieder belüftet, so dass der Sauggreifer von der (an ihrem neuen Standort gebrachten) Platte abgehoben werden kann.

In manchen Anwendungsfällen ist es jedoch erforderlich, den Sauggreifer auch mit einem Überdruckanschluss zu versehen, insbesondere bei der Handhabung von porösen Platten, z. B. dünnen Holz- oder Spanplatten oder Furnierplatten. Diese Platten sind (im Gegensatz zu Glas- oder Metallplatten) nicht völlig Vakuumdicht, was dazu führt, dass häufig nicht nur eine (die oberste) Platte angesaugt wird, sondern auch darunter liegende weitere Platten, da ein Teil des Vakuums die erste, unmittelbar angesaugte Platte quasi durchtritt. In solchen Fällen ist es notwendig, die weiteren, versehentlich mit angesaugten Platten wieder abzuwerfen, was in der Praxis dadurch gelingt, dass der Sauggreifer neben einem Vakuumraum auch einen, in der Regel kleineren, mit Überdruck beaufschlagbaren Raum aufweist. Werden, wie oben beschrieben, zwei oder mehrere Platten angesaugt, so genügt ein kurzer Druckstoß. Dieser führt zwar nicht dazu, dass die erste Platte abgestoßen wird, weil das Vakuum hier stärker ist, durchtritt aber die erste Platte und läst die weiteren, mit angesaugten Platten auf den Stapel zurück.

Bei diesen Sauggreifern ist es selbstverständlich notwendig, den Unterdruckraum von dem Überdruckraum abzudichten, was bei den am Markt erhältlichen Zweikammer-Sauggreifern durch eine weitere, gekrümmte, hervorstehende und als eigenes Bauteil ausgebildete Dichtung erfolgt. Diese ist zwar ebenfalls aus dem gummielastischen Material des Saugkörpers, aber als eigenes Bauteil und mit eigener Befestigung ausgebildet. Darüber hinaus führt der gekrümmte Verlauf der Dichtfläche dazu, dass bei jedem Ansaugvorgang einer Holzplatte, deren Oberfläche immer leicht aufgeraut ist, ein Verschleiß der Dichtfläche der während des Ansaugvorgang gegenüber der Oberfläche verrutschenden Dichtung gegeben ist. Aus diesem Grund müssen die bekannten Dichtungen häufig ausgetauscht werden. Ferner ist der gesamte Aufbau der bekannten Zweikammer-Sauggreifer deutlich aufwendiger, da auch der Saugkörperhalter aufgrund der zusätzlichen Dichtung aus mehreren Teilen besteht, die zusammengeschraubt werden müssen.

Die DE-A-3516941 hat einen Sauggreifer zum Ansaugen und Halten von Werkstücken zum Gegenstand, welcher über einen als elastisches Formteil ausgebildeten Saugkörper und einen Saugkörperhalter verfügt, wobei letzterer eine erste Bohrung zum Anlegen eines Unterdrucks und eine zweite Bohrung zum Anlegen eines Überdrucks zwischen Sauggreifer und Werkstück aufweist. Der Saugkörper hat mit diesen Bohrungen korrespondierende Öffnungen und eine umlaufende Dichtung zur Abgrenzung der Bereiche mit Unterdruck und Überdruck und die Dichtung ist in dem Saugkörper ausgebildet. Nachteilig ist hierbei, dass die Dichtlippe der Druckkammer schräg nach innen verläuft, was aufgrund der vielen Ansaug- und Ablösevorgänge und der hierdurch entstehenden Lateralbewegung zwischen Dichtlippe und Werkstück zu einem sehr hohen Verschleiß der Dichtlippen führt.

Aus der US-A-6 607 054 ist ein Saugkörper bekannt der eine Dichtung mit zwei konzentrisch verlaufenden Dichtlippen aufweist.

Es besteht daher die Aufgabe, einen Sauggreifer so auszubilden, dass der Verschleiß des Saugkörpers minimiert wird und dieser nur selten ausgetauscht werden muss, und dass eine leichte Montierbarheit des Saugkörpers auf den Saugkörperhalter ermöglicht wird.

Gelöst wird diese Aufgabe durch einem gattungsgemäßen Sauggreifen mit den kennzeichnenden Merkmalen des Anspruchs 1.

Vorteilhafte Ausgestattungen sind den Unteransprüchen entnehmbar. Gegenstand der Erfindung ist ferner und der Saugkörper des erfindungsgemäßen Sauggreifers

Ein Ausführungsbeispiel eines erfindungsgemäßen Sauggreifer wird im folgenden unter Bezugnahme auf die begleitenden Zeichnungen näher beschrieben. Diese zeigen:
- **Figur 1:**: eine Draufsicht auf den Sauggreifer von der Blickrichtung des anzusaugenden Werkstücks;
- **Figur 2:**: einen teilweisen Querschnitt durch die Ansicht aus Figur 1;
- **Figur 3:**: eine Draufsicht auf die dem Werkstück angewandte Seite des in den Figuren 1 und 2 dargestellten Saugkörpers; und
- **Figur 4:**: einen Querschnitt durch die Darstellung der Figur 3.

Der erfindungsgemäße Sauggreifer besteht lediglich aus zwei Teilen, nämlich dem als elastisches Formteil aus Gummi, Naturkautschuk oder gummielastischem Material ausgebildeten Saugkörper 1 und dem diesen Saugkörper 1 haltenden, vorzugsweise aus Metall gefertigten Saugkörperhalter 2. Der Saugkörperhalter 2 weist eine erste, dezentral angeordnete Bohrung 3 zum Anlegen eines Unterdrucks eine zweite, zentral angeordnete Bohrung 4 zum Anlegen eines Überdrucks zwischen Sauggreifer und (nicht dargestelltem) Werkstück auf, wobei eine oder beide dieser Bohrungen auch dazu dienen können, den Sauggreifer am Ende eines (ebenfalls nicht dargestellten) Manipulators oder Roboterarms zu befestigen.

Der aus gummielastischem Material bestehenden Saugkörper 1 weist zu den Bohrungen 3 und 4 korrespondierende Öffnungen 5 bzw. 6 auf, so dass der angelegte Unter- bzw. Überdruck auch in den dem Werkstück zugewandten Raum gelangen kann.

Die dem Werkstück zugewandte Oberfläche des Saugkörpers 1 weist verschiedene, im Spritzgussverfahren in den Saugkörper 1 eingebrachte Profilierungen auf. Zunächst befindet sich zwischen der inneren, zentralen Öffnung 6 des Saugkörpers 1 und dessen Peripherie eine erste umlaufende Dichtung 7, welche den inneren Überdruckbereich von dem äußeren peripheren Unterdruckbereich abgrenzt und abdichtet. Diese Dichtung 7 ist eine schmale, stegförmig aus der Oberfläche des Saugkörpers 1 hervorstehenden Dichtung mit zwei Dichtlippen, deren Form man als W-Form beschreiben könnte. Durch die Verwendung von zwei nebeneinander liegenden Dichtlippen wird eine bessere Abdichtung gewährleistet. Ferner ist von Bedeutung, dass die Dichtung 7 im wesentlichen senkrecht aus der Oberfläche des Saugkörpers 1 hervorsteht, also während des Ansaugens und Loslassens des Werkstücks keine laterale Bewegung mit entsprechender Reibung auf dem Werkstück vollzieht.

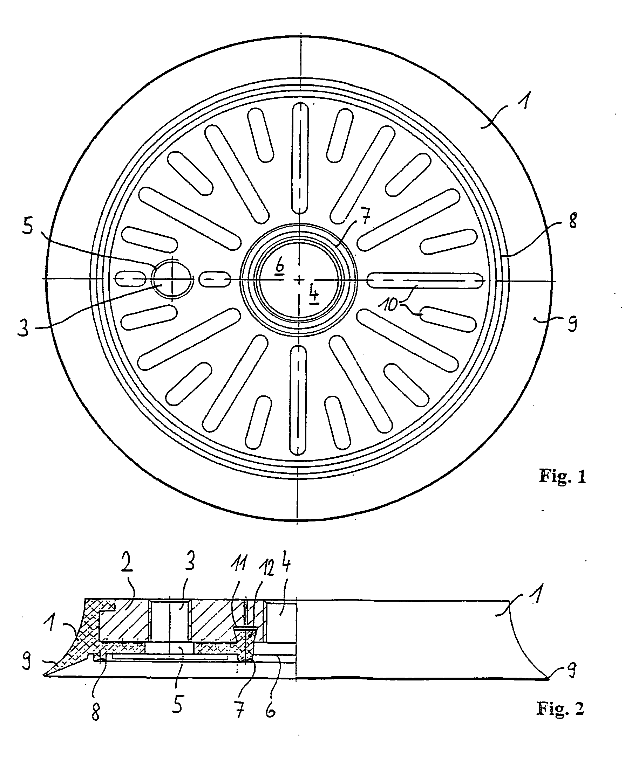

Im Randbereich des Saugkörpers 1 weist dieser, ebenfalls an seiner dem Werkstück zugewandten und in Figur 1 dargestellten Oberfläche eine weitere umlaufende Dichtung 8 auf, die im wesentlichen genauso gestaltet ist wie die Dichtung 7, also die genannte W-Form mit zwei Dichtlippen aufweist und im wesentlichen senkrecht aus der Oberfläche des Saugkörpers 1 hervorsteht. Diese äußere Dichtung 8 dient der Abdichtung des Vakuums gegenüber der Atmosphäre.

Entlang seiner Außenseite, also an seiner Peripherie, weist der vom Werkstück aus betrachtet runde Saugkörper 1 außerhalb der Außendichtung 8 eine schräg nach außen und in Richtung auf das Werkstück weisende Dichtfläche 9 auf, deren Dicke, gesehen in ihrem radialen Querschnitt (vergleiche Figur 2) von innen nach außen kontinuierlich abnimmt. Hierdurch wird eine nach außen hin zunehmende Flexibilität dieser Dichtfläche gewährleistet, welche letztendlich in einer dünnen Dichtlippe ganz an der äußeren Peripherie des Saugkörpers 1 endet. Auf diese Weise ergibt sich bei unebenen Oberflächen, wo die Außendichtung 8 teilweise nur unvollständig anliegt, eine zusätzliche Dichtung, da sich die Dichtfläche 9 aufgrund der nach außen hin zunehmenden Elastizität der Werkstückoberfläche in einem gewissen Umfang anpassen kann.

Wie in Figur 1 dargestellt weist der Saugkörper 1 an seiner dem Werkstück zugewandten Oberfläche erhabene Stege 10 auf, die im dargestellten Ausführungsbeispiel radial nach außen weisen, wobei sich Stege unterschiedlicher Länge abwechseln. Diese Stege 10 befinden sich im Vakuumraum, also zwischen den beiden umlaufenden Dichtungen 7 und 8 und dienen der Verbesserung des Reibschlusses zum angesaugten Werkstück.

Wie insbesondere in Figur 2 zu erkennen ist weist der Saugkörperhalter 2 an seiner dem Saugkörper 1 zugewandten Seite eine umlaufende Nut 11 mit schwalbenschwanzförmigem Querschnitt auf. In diese Nut greif ein entsprechendes schwalbenschwanzförmiges profil 12 des Saugkörpers ein. Ferner ist aus Figur 2 ersichtlich, dass der Saugkörper 1 an seiner dem Werkstück abgewandten Außenseite den Saugkörperhalter 2 radial übergreift. Durch diese Kombination aus äußerem Übergreifen und schwalbenschwanzförmiger inneren Aufnahme wird eine leichte Montierbarkeit des Saugkörpers 1 auf dem Saugkörperhalter 2 ermöglicht, da lediglich von innen nach außen montiert werden muss. Zunächst wird hierbei das schwalbenschwanzförmige Profil 12 des Saugkörpers 1 in die entsprechende Nut 11 des Saugkörperhalters 2 eingesteckt und anschließend der Rand des Saugkörpers 1 über die Außenseite des Saugkörperhalters 2 gestülpt. So ist auch ein schnelles Ersetzten eines verschlissenen Saugkörpers 1 auf dem Saugkörperhalter 2 ohne Werkzeug möglich. Schließlich bietet die Schwalbenschwanzaufnahme (Bezugszahlen 11 und 12) den Vorteil, dass im Betrieb ein Nachgeben des Profils 12 und damit der unmittelbar darunter angeordneten inneren Dichtung 7, und damit eine Anpassung an verschiedene Oberflächen des handzuhabenden Werkstücks möglich ist.

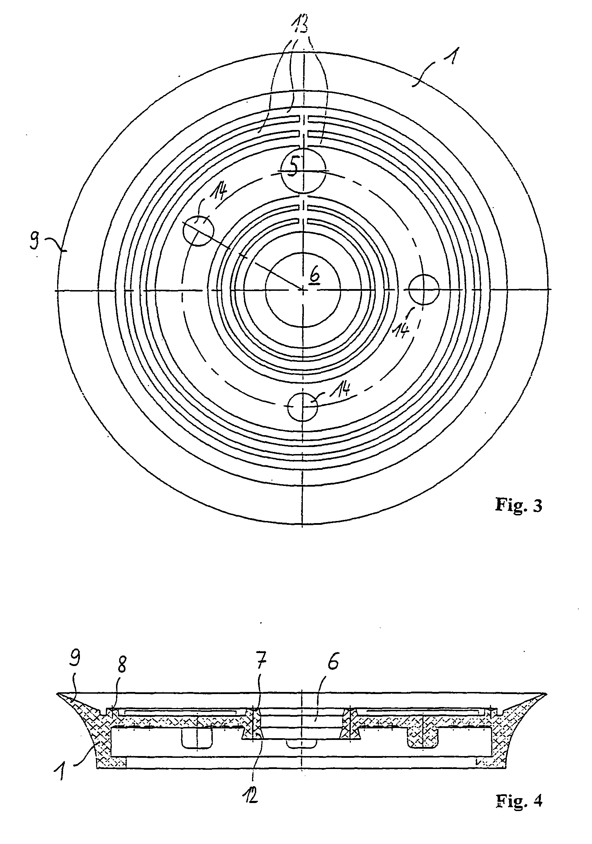

Die dem Werkstück abgewandte Rückseite des Saugkörpers 1 wird unter Bezugnahme auf die Figuren 3 und 4 beschrieben. Figur 3 zeigt hierbei eine besonders vorteilhafte Ausgestaltung des Saugkörpers 1 der Gestalt, dass dieser an seiner dem Werkstück abgewandten und dem Saugkörperhalter 2 zugewandten Rückseite umlaufende Kanäle 13 aufweist. Diese Kanäle 13 sind im wesentlichen tangential angeordnet und stehen mit der Öffnung 5 in dem Saugkörper 1, welche wiederum mit der Bohrung 3 in dem Saugkörperhalter 2 korrespondiert in Verbindung. Auf diese Weise gelangt das Vakuum, welches an die Bohrung 3 angelegt wird, nicht nur in den Raum zwischen Saugkörper 1 und Werkstück, sondern auch in die Kanäle 13, also zwischen Saugkörperhalter 2 und Saugkörper. Damit wird eine zusätzliche Fixierung des Saugkörpers 1 auf dem Saugkörperhalter 2 erreicht.

Besonders vorteilhaft ist es, diese umlaufenden Kanäle 13 in den Saugkörper 1 einzubringen, da dieser als billiges Formteil, zu dessen Herstellung nur einmal ein Werkzeug angefertigt werden muss, praktisch beliebige Oberflächengestaltung aufweisen kann, ohne dass hierdurch bei der Fertigung Mehrkosten entstehen. Bringt man hingegen entsprechende Kanäle in den aus Metall bestehenden Saugkörperhalter 2 ein, wie es in den am Markt befindlichen Zweikammer-Sauggreifern erfolgt, ist der Fertigungsaufwand erheblich höher, da die Kanäle dann mit Hilfe spanabhebender Materialbearbeitung bei jedem Einzelstück einzeln eingefräst oder gedreht werden müssen.

Die Figuren 3 und 4 zeigen daneben noch eine Verdrehsicherung des Saugkörpers 1 auf dem Saugkörperhalter 2. Hierzu weist der Saugkörper 1 drei Noppen 14 auf, welche asymmetrisch angeordnet sind und in entsprechende Vertiefungen des Saugkörperhalters 2 (nicht dargestellt) eingreifen.

Gegenstand der Erfindung ist nicht nur ein Sauggreifer, bestehend aus einem Saugkörper und einem Saugkörperhalter, sondern auch ein Saugkörper mit den beschriebenen Merkmalen, insbesondere also mit der integrierten Innendichtung 7, der integrierten Außendichtung 8, der genauen Gestalt der beiden Dichtungen in W-Form, der äußeren Dichtfläche 9, den rückseitigen, umlaufenden Kanälen 13, den erhabenen Stegen 10, dem schwalbenschwanzförmigen Profil 12 und den Noppen 14.

## Patentansprüche

1. Sauggreifer zum Ansaugen und Halten von Werkstücken, mit einem als elastisches Formteil ausgebildeten Saugkörper (1) und einem Saugkörperhalter (2), wobei der Saugkörperhalter eine erste Bohrung (3) zum Anlegen eines Unterdrucks und eine zweite Bohrung (4) zum Anlegen eines Überdrucks zwischen Sauggreifer und Werkstück und der Saugkörper (1) mit diesen Bohrungen(3, 4) korrespondierende Öffnungen (5, 6) aufweist, und eine umlaufende Dichtung (7) zur Abgrenzung der Bereiche mit Unterdruck und Überdruck vorgesehen ist, wobei die Dichtung (7) in dem Saugkörper (1) ausgebildet ist, **dadurch gekennzeichnet, dass** die Dichtung (7) mindestens zwei konzentrisch verlaufende Dichtlippen aufweist und der Saugköperhalter (2) an seiner dem Saugkörper (1) zugewandten Seite eine umlaufende Nut (11) mit schwalbenschwanzförmigem Querschnitt aufweist, in welche ein entsprechendes schwalbenschwanzförmiges Profil (12) des Saugkörpers (1) eingreift.

2. Sauggreifer nach Anspruch 1, **dadurch gekennzeichnet, dass** der Sauggreifer vom Werkstück aus betrachtet, im wesentlichen rund ist, die erste Bohrung (3) dezentral und die zweite Bohrung (4) zentral angeordnet ist und die Dichtung (7) die zweite Bohrung umgibt.

3. Sauggreifer nach einem der voranstehenden Ansprüche, **dadurch gekennzeichnet, dass** der Saugkörper (1) an seinem äußeren, dem Werkstück zugewandten Rand eine umlaufende Außendichtung (8), vorzugsweise mit zwei konzentrischen Dichtlippen aufweist.

4. Sauggreifer nach einem der voranstehenden Ansprüche, **dadurch gekennzeichnet, dass** der Saugkörper (1) an seiner Außenseite eine schräg nach außen und in Richtung auf das Werkstück weisende Dichtfläche (9) aufweist, deren Dicke, gesehen in ihrem radialen Querschnitt von innen nach außen, kontinuierlich abnimmt.

5. Sauggreifer nach einem der voranstehenden Ansprüche, **dadurch gekennzeichnet, dass** der Saugkörper (1) an seiner dem Saugkörperhalter (2) zugewandten Rückseite umlaufende Kanäle (13) aufweist, welche mit der ersten Bohrung verbunden sind.

6. Sauggreifer nach einem der voranstehenden Ansprüche, **dadurch gekennzeichnet; dass** der Saugkörperhalter (2) aus Metall besteht und einstückig ausgebildet ist.

7. Sauggreifer nach einem der voranstehenden Ansprüche, **dadurch gekennzeichnet, dass** der Saugkörper (1) aus Gummi oder Naturkautschuk besteht.

8. Sauggreifer nach einem der voranstehenden Ansprüche, **dadurch gekennzeichnet, dass** der Saugkörper (1) an seiner dem Werkstück zugewandten Oberfläche erhabene Stege (10) aufweist.

9. Sauggreifer nach einem der voranstehenden Ansprüche, **dadurch gekennzeichnet, dass** der Saugkörper (1) an seiner dem Werkstück abgewandten Außenseite, den Saugkörperhalter (2) radial übergreift.

10. Sauggreifer nach einem der voranstehenden Ansprüche, **dadurch gekennzeichnet, dass** der Saugkörperhalter (2) an seiner dem Saugkörper (1) zugewandten Seite mindestens eine Vertiefung aufweist, in welche ein Noppen (14) an der dem Saugkörperhalter (2) zugewandten Rückseite des Saugkörpers (1) eingreift.

11. Sauggreifer nach Anspruch 10, **dadurch gekennzeichnet, dass** mehrere Vertiefungen und Noppen (14) vorgesehen sind, welche asymmetrisch angeordnet sind.

12. Saugkörper für einen Sauggreifer nach einem der voranstehenden Ansprüche.

## Claims

1. Suction gripper for attachment and holding of workpieces by suction, with a suction member (1) embodied as a flexible shaped part and a suction member holder (2), wherein the suction member holder exhibits a first bore (3) for applying a negative pressure and a second bore (4) for applying a positive pressure between the suction gripper and the workpiece, and the suction member (1) exhibits openings (5, 6) corresponding with these bores (3, 4), and a circumferential seal (7) is provided for separating the areas with negative pressure and positive pressure, the seal (7) being formed in the suction member (1), **characterised in that** the seal (7) exhibits at least two sealing lips running concentrically and on its side facing the suction member (1) the suction member holder (2) exhibits a circumferential groove (11) with a dovetail-shaped cross-section into which a corresponding dovetail-shaped profile (12) of the suction member (1) engages.

2. Suction gripper according to claim 1, **characterised in that** when viewed from the workpiece, the suction gripper is essentially round, the first bore (3) is arranged decentrally and the second bore (4) centrally, and the seal (7) surrounds the second bore.

3. Suction gripper according to one of the preceding claims, **characterised in that** at its outer edge facing the workpiece the suction member (1) exhibits a circumferential outer seal (8), preferably with two concentric sealing lips.

4. Suction gripper according to one of the preceding claims, **characterised in that** on its outside the suction member (1) exhibits a sealing face (9) which faces obliquely outwards and in the direction of the workpiece and the thickness of which viewed in its radial cross-section from the inside to the outside, decreases continuously.

5. Suction gripper according to one of the preceding claims, **characterised in that** on its rear side facing the suction member holder (2) the suction member (1) exhibits circumferential channels (13) which are connected to the first bore.

6. Suction gripper according to one of the preceding claims, **characterised in that** the suction member holder (2) is made of metal and formed in one piece.

7. Suction gripper according to one of the preceding claims, **characterised in that** the suction member (1) is made of rubber or natural rubber.

8. Suction gripper according to one of the preceding claims, **characterised in that** on its surface facing the workpiece the suction member (1) exhibits raised ridges (10).

9. Suction gripper according to one of the preceding claims, **characterised in that** on its outside facing away from the workpiece the suction member (1) engages radially over the suction member holder (2).

10. Suction gripper according to one of the preceding claims, **characterised in that** on its side facing the suction member (1) the suction member holder (2) exhibits at least one recess into which a protrusion (14) on the rear side of the suction member (1) facing the suction member holder (2) engages.

11. Suction gripper according to claim 10, **characterised in that** a plurality of recesses and protrusions (14) are provided which are arranged asymmetrically.

12. Suction member for a suction gripper according to one of the preceding claims.

## Revendications

1. Pince aspirante permettant d'aspirer et de maintenir des pièces à usiner, comportant un corps aspirant (1) réalisé sous forme de pièce moulée élastique et un porte-corps aspirant (2), le porte-corps aspirant présentant un premier alésage (3) permettant d'appliquer une dépression et un deuxième alésage (4) permettant d'appliquer une surpression entre la pince aspirante et la pièce à usiner et le corps aspirant (1) avec ces alésages (3, 4) présentant des ouvertures (5, 6) correspondantes, et un joint périphérique (7) permettant de délimiter les zones à dépression et à surpression étant prévu, le joint (7) étant réalisé dans le corps aspirant (1), **caractérisée en ce que** le joint (7) présente au moins deux lèvres d'étanchéité concentriques et le porte-corps aspirant (2) présente au niveau de son côté tourné vers le corps aspirant (1) une rainure périphérique (11) avec section transversale en queue d'aronde, dans laquelle un profil en queue d'aronde (12) correspondant du corps aspirant (1) est en prise.

2. Pince aspirante selon la revendication 1, **caractérisée en ce que** la pince aspirante vue de la pièce à usiner est essentiellement ronde, le premier alésage (3) est disposé de manière décentralisée et le deuxième alésage (4) de manière centralisée et le joint (7) entoure le deuxième alésage.

3. Pince aspirante selon l'une quelconque des revendications précédentes, **caractérisée en ce que** le corps aspirant (1) présente au niveau de son bord extérieur, tourné vers la pièce à usiner, un joint extérieur périphérique (8), de préférence avec deux lèvres d'étanchéité concentriques.

4. Pince aspirante selon l'une quelconque des revendications précédentes, **caractérisée en ce que** le corps aspirant (1) présente au niveau de sa face extérieure une surface d'étanchéité (9) dirigée en biais vers l'extérieur et en direction de la pièce à usiner, l'épaisseur de la surface, vue dans sa section transversale radiale, diminuant en continu de l'intérieur vers l'extérieur.

5. Pince aspirante selon l'une quelconque des revendications précédentes, **caractérisée en ce que** le corps aspirant (1) présente au niveau de sa face arrière tournée vers le porte-corps aspirant (2), des canaux (13) périphériques qui sont reliés au premier alésage.

6. Pince aspirante selon l'une quelconque des revendications précédentes, **caractérisée en ce que** le porte-corps aspirant (2) est en métal et est réalisé d'un seul tenant.

7. Pince aspirante selon l'une quelconque des revendications précédentes, **caractérisée en ce que** le corps aspirant (1) est en caoutchouc synthétique ou en caoutchouc naturel.

8. Pince aspirante selon l'une quelconque des revendications précédentes, **caractérisée en ce que** le corps aspirant (1) présente des nervures en relief (10) au niveau de sa surface tournée vers la pièce à usiner.

9. Pince aspirante selon l'une quelconque des revendications précédentes, **caractérisée en ce que** le corps aspirant (1) chevauche radialement le porte-corps aspirant (2) au niveau de sa face extérieure tournée vers la pièce à usiner.

10. Pince aspirante selon l'une quelconque des revendications précédentes, **caractérisée en ce que** le porte-corps aspirant (2) présente au niveau de son côté tourné vers le corps aspirant (1) au moins un évidement, dans lequel une protubérance (14) est en prise au niveau de la face arrière du corps aspirant (1) tournée vers le porte-corps aspirant (2).

11. Pince aspirante selon la revendication 10, **caractérisée en ce que** plusieurs évidements et protubérances (14) sont prévus, lesquels sont disposés de manière asymétrique.

12. Corps aspirant pour une pince aspirante selon l'une quelconque des revendications précédentes.
